(19) **Europäisches Patentamt / European Patent Office / Office européen des brevets**

(11) **EP 2 293 134 B1**

(12) **EUROPEAN PATENT SPECIFICATION**

(45) Date of publication and mention
of the grant of the patent:
**16.07.2014 Bulletin 2014/29**

(21) Application number: **10010514.7**

(22) Date of filing: **22.12.2000**

(51) Int Cl.:
*G02B 26/02* (2006.01)     *G02B 27/54* (2006.01)
*G02B 3/14* (2006.01)       *H04N 5/74* (2006.01)
*H04N 9/31* (2006.01)       *H01J 29/12* (2006.01)
*G02B 26/08* (2006.01)

(54) **Optical systems**

Optische Systeme

Systèmes optiques

(84) Designated Contracting States:
**AT BE CH CY DE DK ES FI FR GB GR IE IT LI LU MC NL PT SE TR**

(30) Priority: **23.12.1999 GB 9930555**

(43) Date of publication of application:
**09.03.2011 Bulletin 2011/10**

(62) Document number(s) of the earlier application(s) in accordance with Art. 76 EPC:
**08016546.7 / 2 000 828**
**00985693.1 / 1 244 928**

(73) Proprietor: **Longevyty AS**
**3189 Horten (NO)**

(72) Inventor: **Guscho, Yury**
**3189 Horten (NO)**

(74) Representative: **Butler, Michael John**
**Dehns**
**St Bride's House**
**10 Salisbury Square**
**London**
**EC4Y 8JD (GB)**

(56) References cited:
**RU-C1- 2 031 624     RU-C1- 2 080 641**
**SU-A1- 678 519       US-A- 5 920 418**

- **GUSHCHO YU P ET AL: "A Large-Screen Laser Projector based on Light Modulation in a Gel-like Deformable Layer", JOURNAL OF THE MOSCOW PHYSICAL SOCIETY, vol. 7, 1997, pages 351-361, XP000997110, Allerton Press Inc, US**
- **ALEKHIN V A: "Characteristics of Multichannel Phase Reliefographic Light Modulators", AVTOMETRIYA, no. 1, 1990, pages 38-43, XP000997514, Allerton Press Inc, US**
- **ALEKHIN V A: "Calculation of the optical Parameters of a Cylindrical Schlieren Projector", SOVIET JOURNAL OF OPTICAL TECHNOLOGY., vol. 52, no. 7, July 1985 (1985-07), pages 403-405, XP000997107, AMERICAN INSTITUTE OF PHYSICS, NEW YORK, NY., US ISSN: 0038-5514**
- **ALEKHIN V A ET AL: "Optical Characteristics of Phase-Relief Recording with Signal Recording from the Side of the Substrate", OPTICAL SPECTROSCOPY (USSR), vol. 52, no. 1, January 1982 (1982-01), pages 61-63, XP000990563, OPTICAL SOCIETY OF AMERICA., US ISSN: 0030-400X**
- **ALEKHIN A V ET AL: "Calculation of the Value of the Luminous Efficiency when Reproducing Relief Recordings by Schlieren Optics with Circular Irises", OPTICAL SPECTROSCOPY (USSR), vol. 43, no. 5, 1977, pages 578-581, XP000990869, OPTICAL SOCIETY OF AMERICA., US ISSN: 0030-400X**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 293 134 B1

**Description**

This invention relates to optical systems, such as systems used in the projection of video images, the recording of video information on photosensitive carriers, optical processing, the display of video information, and illumination engineering. The invention is particularly concerned with light modulators used in optical systems, including their structures, methods of manufacture, and use.

The invention is more particularly concerned with flexible optical systems using light modulators which rely upon the creation of a surface relief under the action of an electric field. Such modulators have been known for many years, and for example in 1939 F. Fischer disclosed an "electro-optical transformer" using an oil layer and Schlieren optics. More recently, consideration has been given to modulators which rely upon the creation of a relief on a gel of a suitable non-polar dielectric material, such as a siloxane gel. A comprehensive discussion of such systems can be found in the book "Physics of Reliefography" by Professor Yuri Guscho published in Moscow in 1999, ISBN 5-8213-0039-8. Various proposals can be found in United States patents 4,626,920, 4,857,978 and 4,900,136, as well in Russian Federation patents 2031624, 2078478 and 2080641.

A light modulator which has been found to be successful comprises two deformable dielectric layers of different refractive coefficients, at least one of which is a gel. Typically the other layer may be air. Electrodes are provided either side of the layers, and reliefs are generated at the interface between the two layers in response to applied signals.

Polyorganosiloxane gels are particularly preferred for use as the gel layer in such modulators. One suitable gel is prepared by adding tetraethoxysilane, as a cross linking agent, and tin diethyldicaprylate, as a catalyst, to a solution of a $\alpha,\omega$-dihydroxypolydimethylsiloxane of general formula :

$HO\text{-}Si(CH_3)_2O[\text{-}SiO(CH_3)_2\text{-}]_nSi(CH_3)_2\text{-}OH$
in a polydimethylsiloxane of general formula :

$$(CH_3)_3SiO[\text{-}SiO(CH_3)_2\text{-}]_nSi(CH_3)_3$$

Such a gel has several advantages. It is transparent, flexible, and has good optical properties. It exhibits good response times in the formation of reliefs. It is stable and can withstand high temperatures.

A method of preparing such a polyorganosiloxane gel is disclosed, for example, in Russian Federation patent application 97108886/04 published in the Bulletin of Inventions No. 12 of 1999.

In RU 2080624 C1, there is disclosed a colour optical system comprising means for producing light fluxes of three different colours and further comprising three colour channels adapted to handle said fluxes of three different colours respectively, output from the three channels being combined to create a colour image, wherein each channel includes an optical element having at least one cell comprising two deformable dielectric layers which meet at an interface, at least one of which is a relief forming gel, a first electrode on one side of the layers and signal electrode on the other side of the layers, means for supplying a signal to the signal electrode and means for supplying a support voltage to the first electrode.

The present invention is characterised over this disclosure in that the support voltage for each channel differs from the support voltage of the other channels and is proportional to the wavelength of light being handled by the channel.

In some embodiments each channel includes a light source, first diaphragm means, a said optical element and a second diaphragm means.

In one embodiment, a system of reflecting mirrors summates the output of the three channels into a full colour image.

In another embodiment, a system of dichroic mirrors is such that the output from the last of the dichroic mirrors is a single flux.

In one embodiment, each channel includes a light source, first diaphragm means, and a said optical element, wherein there is a common second diaphragm means to receive combined output from the three channels, the second diaphragm means being in the form of a system of light filters capable of stopping light fluxes of zero orders of diffraction but passing light fluxes of higher orders of diffraction for all three colours.

In one embodiment, there is a common light source and each channel includes first diaphragm means, and second diaphragm means independent of the second diaphragm means for the other channels, the second diaphragm means for each channel permitting the passage only of light of the colour associated with that channel.

Preferably, the optical element meets the following criteria:

$0.01d1 < d2 < d1$
$d2 > \lambda/(20|\eta1\text{-}\eta2|)$
$|\eta1\text{-}\eta2| > 0.1$

tp > 0.01 τm

0.1d1 <L<10d1

in which d2 is the distance between the signal electrode and the interface between the deformable layers; d1 is the distance between the first electrode and the interface between the deformable layers; λ is the wavelength of light with which the optical element is used; η1 is the refractive coefficient of one of the deformable layers; η2 is the refractive coefficient of the other of the deformable layers; tp is the duration of voltage pulses applied to the signal electrodes; τm is the time constant of mechanical relaxation of the relief formed at the interface between the layers; and L is the minimum spatial period between electrodes in adjacent cells.

In some embodiments the relief forming gel of said optical element is a polyorganosiloxane gel.

In accordance with the invention, there are different support voltages for the three modulators since the phase modulation of a light wave passing through the relief of a gel is dependent upon wavelength.

A colour optical system in accordance with the invention, utilising a gel based modulator, will normally include first and second diaphragm means. The transverse section of light fluxes of different orders of diffraction and the distance between them on the surface of the second diaphragm means depend on the wavelength. With certain parameters of a three-color optical system, the zero order of the light of one wavelength can partly overlap with the first order of the light of a different wavelength. The second diaphragm means will stop light fluxes of both zero and first orders of diffraction and this will not work. Therefore, in some embodiments second diaphragm means is in the form of a system of light filters capable of stopping colour fluxes of zero orders of diffraction but passing light fluxes of higher orders of diffraction for all three colours.

In an alternative arrangement, a three colour optical system in accordance with the invention uses a common light source (instead of three independent light sources of different wavelengths) for the three independent colour channels. In order to isolate a light beam of a definite wavelength from the light flux that has passed through the light modulator in each channel, each channel is provided with a second diaphragm of its own. In this case, the formation of colour images is achieved by the spatial-frequency method. The passage of the light flux through the relief surface of the deformable gel layer results in the formation of various diffraction orders; the angles of deflection from the optical axis within the same diffraction order are different for light beams of various wavelengths. The design of the second diaphragm in each independent channel therefore permits one to single out spectral ranges of red, green or blue colours within each diffraction order.

Some embodiments of the invention will now be described with reference to the accompanying drawings, in which :

Fig. 1 shows a cell of a light modulator with a deformable gel layer;

Fig. 2 shows a light modulator with a number of cells having deformable gel layers;

Fig. 3a shows time dependencies of the voltage at the signal electrode, at the outputs of the bias voltage and support voltage units;

Fig. 3b shows the areas demarcated with dotted lines on an enlarged scale;

Fig. 4 shows an embodiment of a three-colour optical system;

Fig. 5 shows another embodiment of a three-colour optical system;

Fig. 6 shows the orders of diffraction of red, green or blue light fluxes in a three-colour optical system such as shown in Fig. 5;

Figs. 7 to 11 show different embodiments of three-colour optical systems;

Figs. 12 and 12 continued show.. part of a system; and

Fig. 13 shows another part of a system.

Throughout the description and drawings, the same numbers have been used for similar items. Where an item or a procedure is not described in full for a particular embodiment, reference can be made to a description elsewhere.

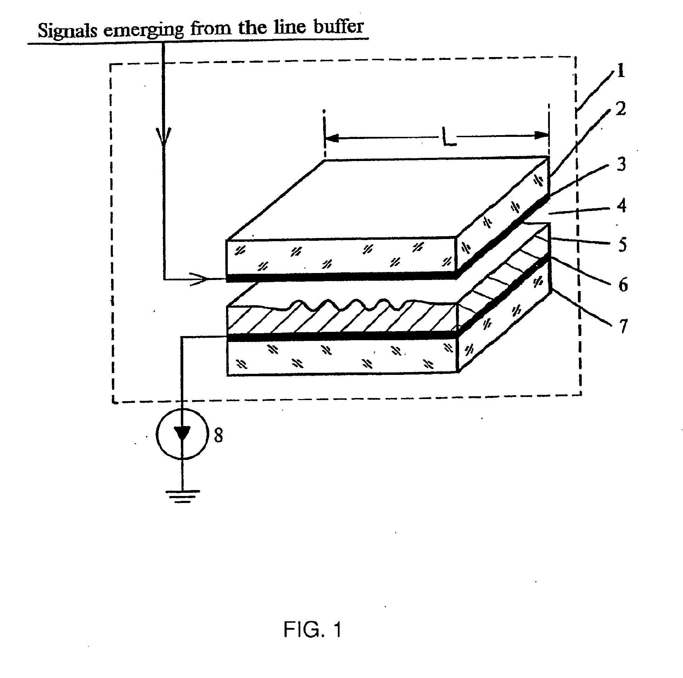

Figure 1 shows a cell (1) of a light modulator with a deformable gel layer. The cell includes a first dielectric substrate layer (7) on which is mounted a first, or support, electrode (6) followed by the gel layer (5). A signal electrode (3) mounted on a second dielectric substrate layer (2) is separated from the deformable gel layer (5) by a second deformable layer (4) which in this case is air. A support voltage unit (8) is also provided. Such a basic arrangement is described in Russian Patent 2080641 to Guscho et al.

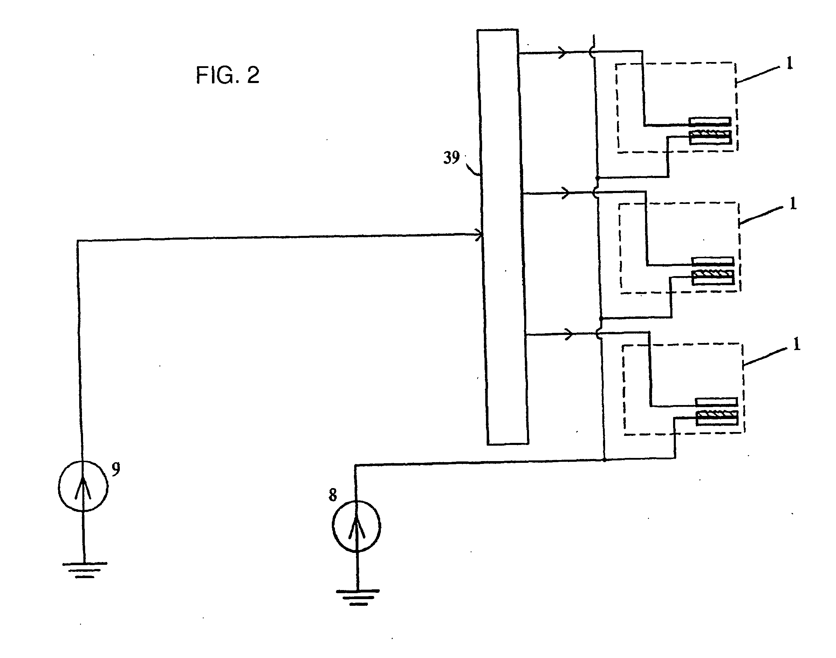

Figure 2 shows an arrangement of several such cells connected in a light modulator. A bias voltage unit (9) is also provided for the signals.

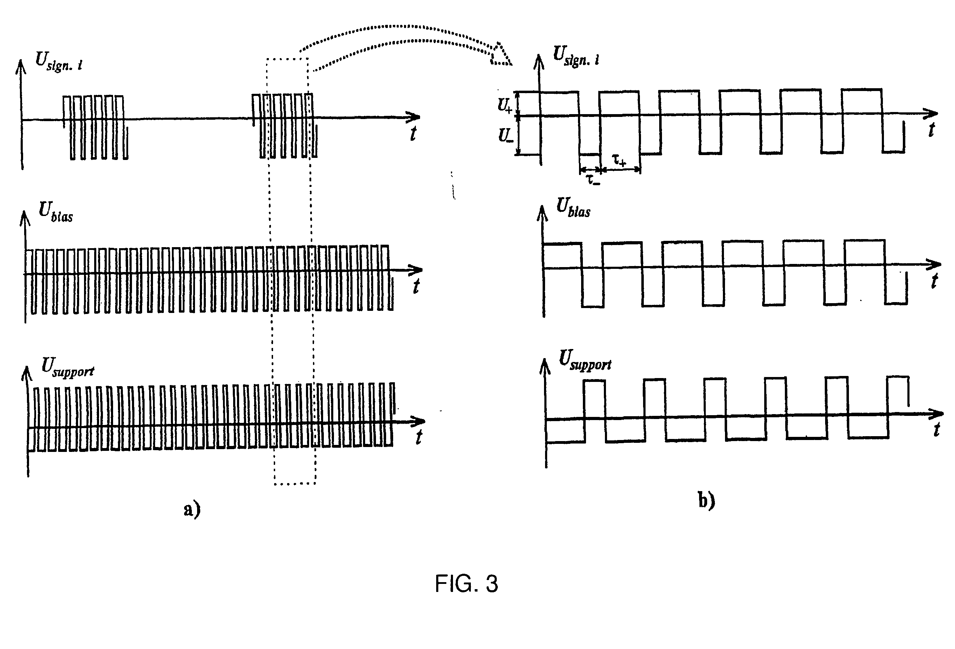

Figure 3 shows time dependencies of the voltage at the $i$-th signal electrode, $U_{sign.i}$, and at the outlets of the bias voltage $(U_{bias})$ and support voltage $(U_{support})$ units. In order to eliminate the inleakage of electric charges in the deformable gel layer, rectangular pulses to be transferred to the signal electrodes, $U_{sign.i}$, are filled with high-frequency rectangular bipolar voltage. The support voltage, $U_{support}$, and the bias voltage, $U_{bias}$, are filled with the same voltage. $U_{support}$ is antiphasic, while $U_{bias}$ is synphasic to $U_{sign\cdot i}$. In Fig. 3b, the area demarcated with a dotted line in Fig. 3a, is shown on an enlarged scale.

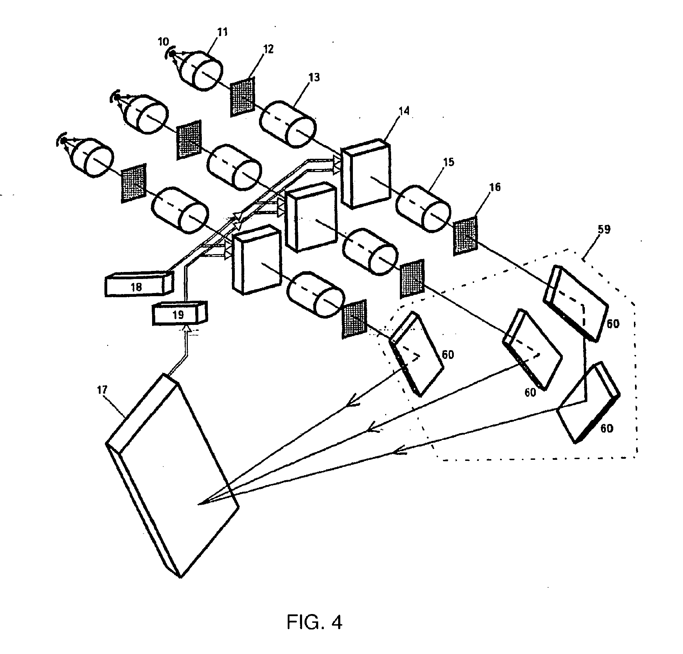

With reference to Figure 4, each channel in the three-colour transformable optical system operates as follows. After passage through a composite projection objective (15) and a second diaphragm (16) of each channel, the three colour light fluxes are summated into a full-colour image projected on the surface of the output optical signal receptor (17) with the aid of reflecting mirrors (60)

In accordance with the invention, a specific feature of the light modulator (14) utilised in the said system is that the support voltages, $U_{support}$, at the outlets of the support voltage units (8) should be different for all the three light modulators (14), since phase modulations, $\Psi(x)$, of a light wave that has passed through the relief surface of the deformable gel layer (5), depends on the wavelength:

$$\Psi(x) = K(2\pi/\lambda)n\zeta(x) \sim \zeta(x) / \lambda ,$$

where $\zeta(x)$ is the profile of the relief formed on the surface of the deformable gel layer (5), $n$ is the refraction coefficient of the gel, K is the specific coefficient for the given system and $\lambda$ is the wavelength. Normal operation of the said system requires that phase modulations, $\Psi(x)$, be equal at equal voltages of the electric signals $U_{sign.i}$, for all the three wavelengths. As has been stated above, the depth of a relief under the $i$-th signal electrode (3) is proportional to $A_i \sim U_{support} \cdot [U_{sign.i} + U_{bias}]$ (e.g., in the case of simultaneous operation of all signal electrodes, $\zeta(x) \sim A\ COS(\beta x)$, and $A_i = A$). Thus, in order to make the ratio, $\zeta(x) / \lambda$ independent of the wavelength, $\lambda$, it is necessary that the support voltage in all the three channels, $U_{support(1,2,3)}$, should be proportional to $\lambda$.

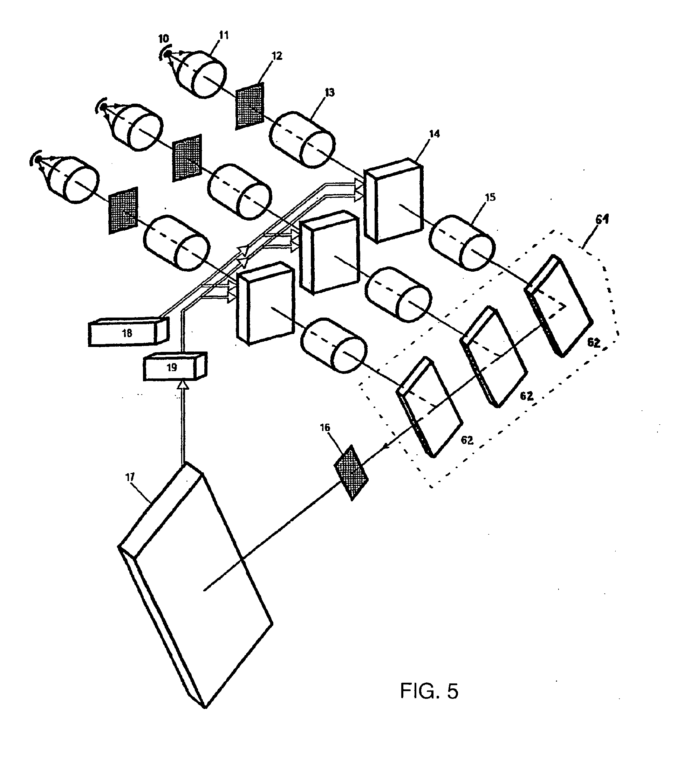

In the embodiment of Fig. 5, the three-colour transformable optical system has essentially the same characteristics as the embodiment described above, but the design of the system of mirrors (61) and the second diaphragm (16) is different.

The system of mirrors (61) utilises dichroic (62) (instead of reflecting) mirrors and features such a construction that would ensure the convergence of light fluxes of different colours within the three-colour transformable optical system (but not on the surface of the output optical signal receptor (17)) so that the three colour beams reflected from the last dichroic mirror are directly transferred to the output optical signal receptor (17) as a single flux.

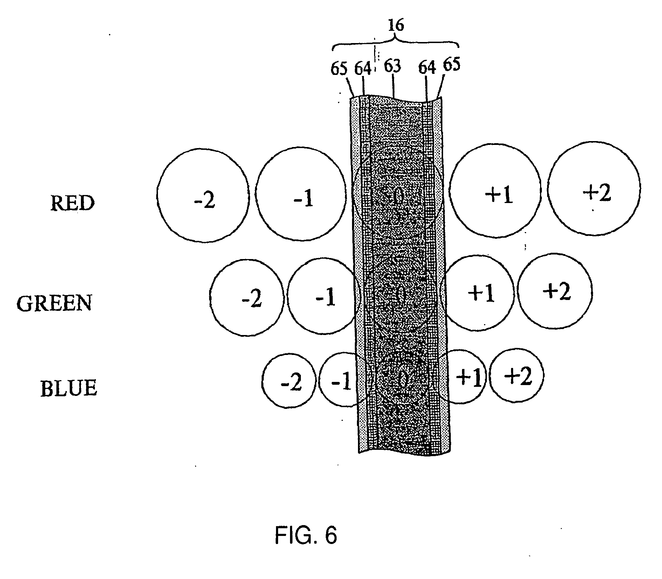

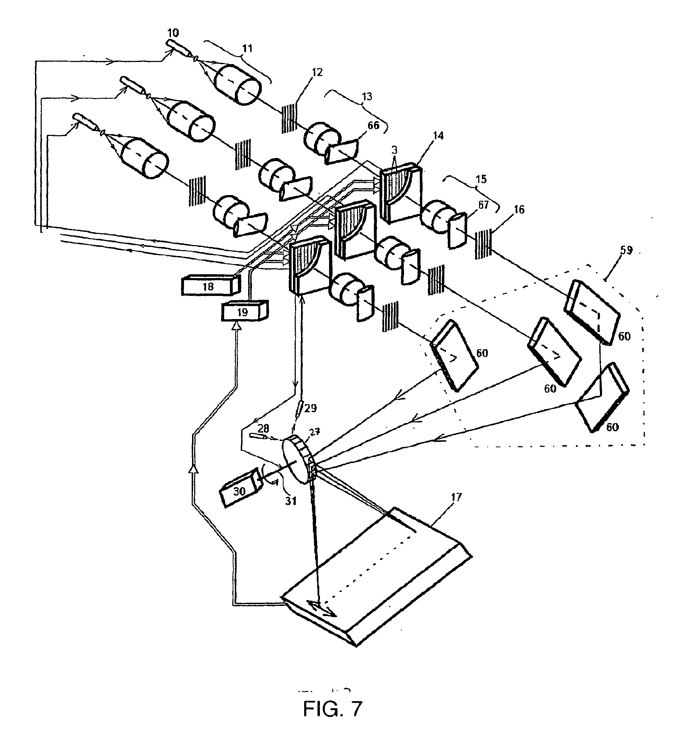

With reference to Fig. 6, the second diaphragm (16) has been made as a system of light filters. The transverse section of light fluxes of different orders of diffraction and the distance between them on the surface of the second diaphragm depend on the wavelength. With certain parameters of a three-colour transformable optical system, the zero order of the light of one wavelength can partly overlap with the first order of the light of a different wavelength. The second diaphragm (16), which is normally non-transparent to light fluxes of any wavelength, is useless in this case, because it stops light fluxes of both zero and first orders of diffraction. Therefore, the second diaphragm may be made as a system of light filters capable to stop colour fluxes of zero orders of diffraction but pass light fluxes of higher orders of diffraction. In Fig. 6, the second diaphragm is depicted as a system of parallel linear light filters which is also compatible with the system shown in Fig. 7.

Similar to the system described above, the support voltages, $U_{support(1,2,3)}$, at the outlets of the support voltage units (8) should be different for all the three light modulators (14) and proportional to the wavelength, $\lambda$.

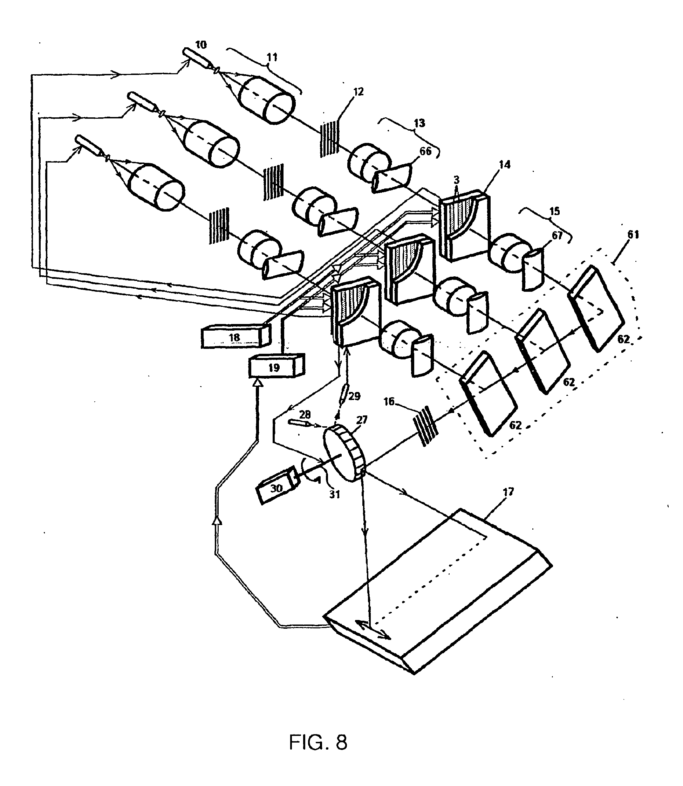

With reference to Figs. 7 and 8, other embodiments of the three-colour optical system are designed for displaying information line by line. Each of its channels operates in the same mode as the single-colour transformable optical system above. Moreover, its construction permits the summation of light beams of different colours in two modes, viz., with the aid of simple and dichroic mirrors. Colour summation with the aid of a system (59) of reflecting mirrors (60) and a system (61) of dichroic mirrors (62) is illustrated in Figs. 7 and 8, respectively.

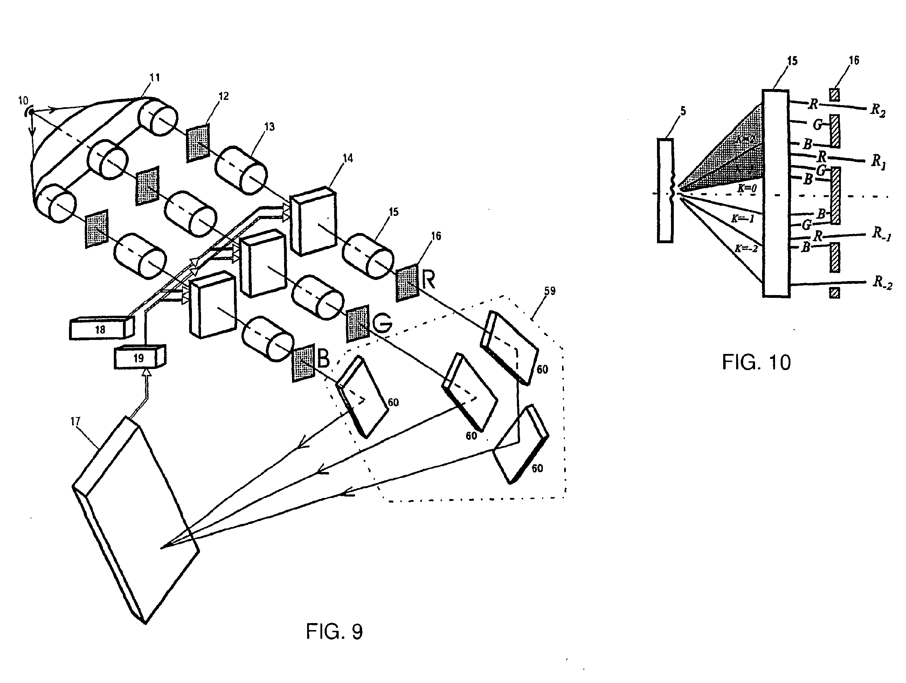

In another embodiment, of Fig. 9, the three-colour transformable optical system utilises a common light source (10) (instead of three independent light sources of different wavelengths) for all the three independent information display channels. The common condenser (11) placed behind the common light source (10) splits the light beam into three separate fluxes and sends them to the first diaphragm (12) and the composite illuminant objective (13) of each independent information display channel. The light modulator (14) with a deformable gel layer in each of the said channels modulates light of a definite wavelength just as in the case of the single-colour systems described above. In order to isolate a light beam of a definite wavelength from the light flux that has passed through the light modulator (14), two second diaphragms (16) have been added to the three-colour transformable optical system utilising one thermal light source (10); thus, each of the said channels has been provided with a second diaphragm (16) of its own.

In this case, the formation of colour images is achieved by the spatial-frequency method. The passage of the light flux through the relief surface of the deformable gel layer (5) results in the formation of various diffraction orders; the angles of deflection from the optical axis within the same diffraction order are different for light beams of various wavelengths. The design of the second diaphragm (16) in each independent information display channel permits one to single out spectral ranges of red, green or blue colours within each diffraction order. The mode of operation of the second diaphragm (16), which passes red light fluxes ($R_{\forall 1}$, $R_{\forall 2}$) of the first ($K=\forall 1$) and second ($K=\forall 2$) orders of diffraction but stops green ($G_{\forall 1}$, $G_{\forall 2}$) and blue ($B_{\forall 1}$, $B_{\forall 2}$) light fluxes as well as light fluxes of zero order of diffraction ($K=0$), is illustrated in Fig. 10.

Light fluxes can be re-summated either directly on the screen (17) with the aid of a system (59) of reflecting mirrors (60) (Fig. 9) or with the aid of dichroic mirrors (i.e., within the three-colour transformable optical system).

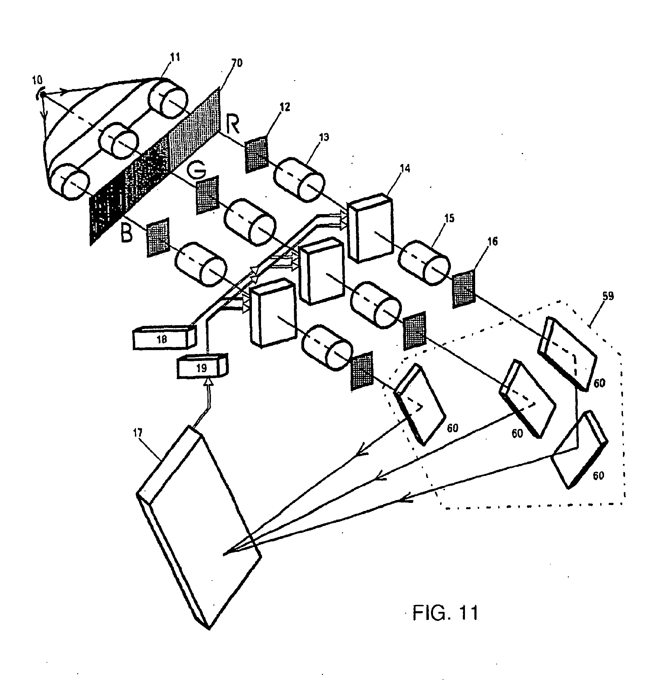

With reference to Fig. 11, the system may be provided with an additional three-section light filter (70) in order to separate red, green and blue light from the non-monochromatic light flux emerging from the common thermal source (10). Then, the colour fluxes are passed through three light modulators (14) with deformable gel layers to be further summated into a full-colour image on the surface of the output optical signal receptor (17) (e.g., on the screen).

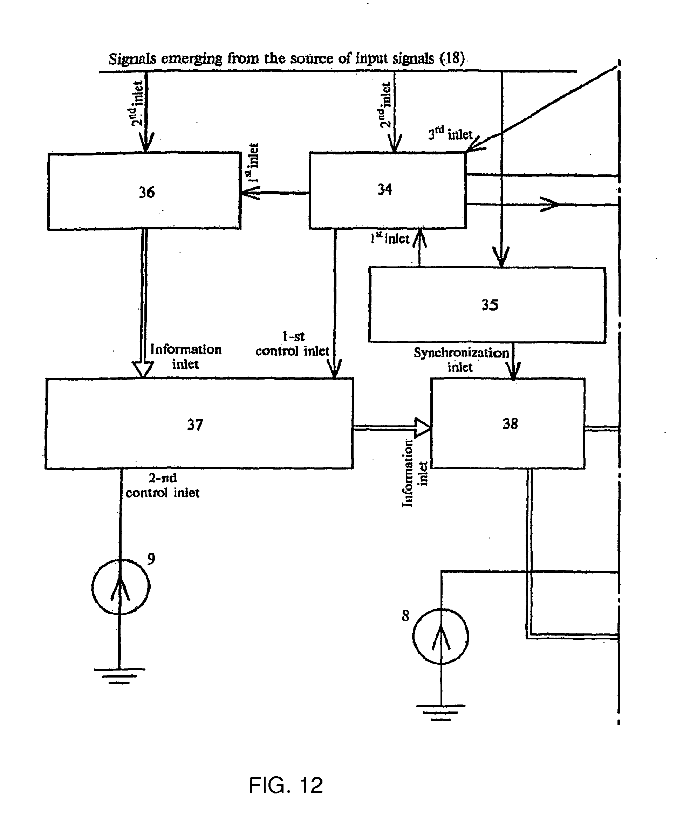

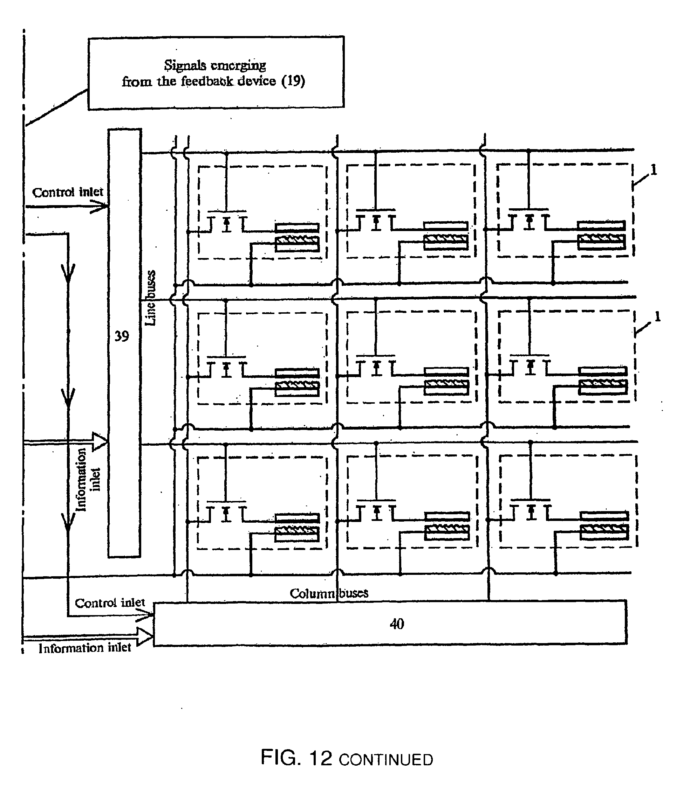

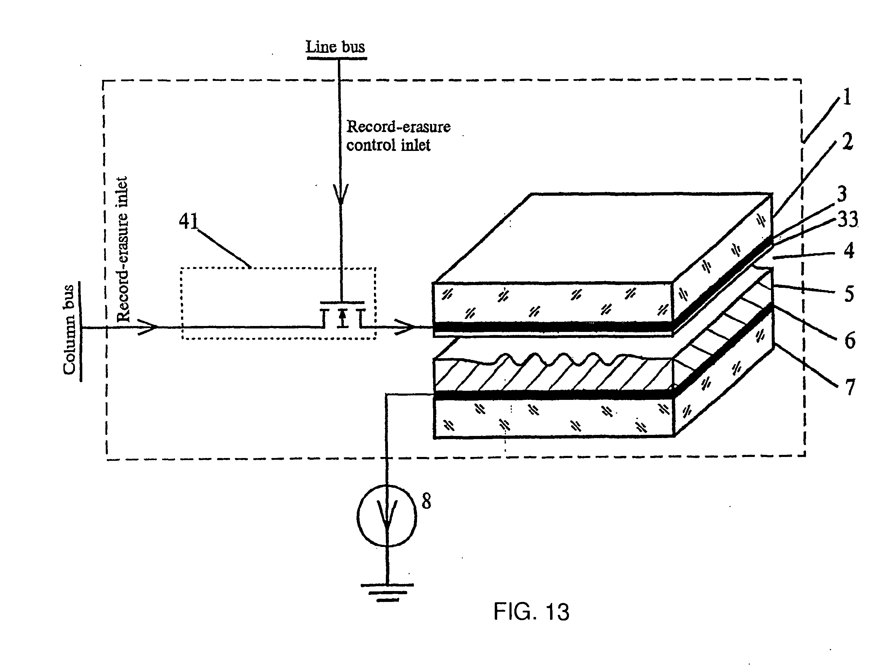

The light modulator (14) operates as follows, with reference also to Figs. 12 and 13.

An information signal (in a digital or analogue form) emerging from a source of input electrical signals (18) is transferred to the 2nd inlet of an input electrical signal converter (36). The information contained in these signals can be transferred either stepwise, line by line (e.g., as PAL, SECAM or NTSC standard video signals), or in the parallel-sequential format with the aid of a multibit bus. As can be evidenced from the command signals emerging from the controller (34) and further transferred to the 1 st inlet of the input electrical signal converter (36), the latter represents information signals transmitted in the form of information pulses. The duration of the said pulses depends on the time required for the reproduction of one element of the transmitted image on the surface of the output optical signal receptor (17). For example, in the case of frame-by-frame transmission of video signals, the matrix of cells (1) of the light modulator (14) with a deformable gel layer has a rectangular structure and the number of cells (1) in the lines and columns of the matrix coincides with the number of lines in a video image and the number of dots per line, respectively. In such an arrangement, the duration of information pulses at the outlet of the input electrical signal converter (36) cannot exceed the duration of one frame (or a half-frame as in the case of interlaced scanning). In the case of non-interlaced scanning of video signals (wherein the matrix of cells (1) of the light modulator (14) with a deformable gel layer represents a row of parallel electrodes and the number of cells (1) in this row is equal to the number of dots in one video image line), the duration of information pulses at the outlet of the input electrical signal converter (36) cannot exceed the duration of one line. Besides, the duration of information pulses at the outlet of the input electrical signal converter (36) cannot be less than the total time of the development and erasure of a relief on the surface of the deformable gel layer (5) of the light modulator (14).

The information pulses emerging from the input electrical signal converter (36) are transferred to the information inlet of a grey-scale corrector (37) either in a sequential or in a parallel-sequential format (e.g., as lines of a video image). It is known that the grey-scale characteristics of a light modulator (14) with a deformable gel layer (5) (i.e., the dependence of illumination intensity on the surface of the output optical signal receptor (17) in a given point on the voltage applied to the corresponding signal electrode (3)) has an S-shape. In order to correct the shape of grey-scale characteristic curves, the light modulator (14) with a deformable gel layer has been provided with the grey-scale corrector (37) whose outlet is connected with the information inlet of a separator (38), and the 1 st and 2nd control inlets are connected with the controller (34) and the bias voltage unit (9), respectively. These elements make it possible to correct, where necessary, the grey-scale characteristics of the light modulator (14) and to give it a linear or any other shape. Within the grey-scale corrector (37), the amplitude of each information pulse increases or decreases depending on the shape of the grey-scale characteristics and the output voltage of the bias voltage unit (9). The correction is performed with the help of command signals transferred from the controller (34) to the 1 st control inlet of the grey-scale corrector (37) according to the signals sent to the 3rd inlet of the controller (34) by a feedback device (19). The feedback device (19) may include one or more photosensors in the plane of the signal receptor (17).

The shape of the corrected grey-scale characteristic curve depends on the specific function of the single-colour transformable optical system. If the latter is used as a TV projector, the non linearity of the said curve at extremely low or extremely high voltages will narrow the range of admissible control voltages; in this case, it is desirable to enlarge the linear segment of the grey-scale curve. It is also possible to attain not only smooth but also discrete multilevel (including two-level) correction where illumination intensity on the surface of the output optical signal receptor (17) approximates zero at the instantaneous value of the signal voltage at the i-th signal electrode (3), Usign.i, which is less than a certain threshold value, Uthresh, and is maximum at Usign.i > Uthresh..

The information pulses with a corrected amplitude are further transferred to the information inlet of the separator (38). The separator (38) and the controller (34) record these pulses into the cells (1) of the light modulator (14) in accordance with the "tact" or clock pulses emerging from a synchroniser (35).

In the case of line-by-line transmission of TV signals, the input electrical signal converter (36) forms video frames consisting of a definite number of lines (625 lines for a PAL - SECAM standard and 525 lines for an NTSC standard). In order to record the i-th line, the separator (38) first transfers the line to a column buffer (40) and then sends a recording signal to the information inlet of a line buffer (39). Then the controller (34) sends a pulse to the control inlet of the line buffer (39) which recognises this particular line in the matrix of cells (1) of the light modulator (14) as corresponding to the i-th line of the input signal. Along this pulse, the recording signal from the separator (38), which triggers switch devices (41), is transferred to the control record-erasure inlets of all switch devices (41) of the selected line in the matrix of cells (1). Then the pulse generated by the controller (34) is applied to the control inlet of the column buffer (40) which sets the voltages for the dots in the i-th line previously recorded into the column buffer (40) from the separator (38). These voltages are further supplied to the signal electrodes (3) of the cells (1) of the light modulator (14) through the record-erasure inlets of the triggered switch devices (41). After the required voltages of the i-th line of the input signal have been set at the signal electrodes (3) as corresponding to the i-th line of the matrix of cells (1) (this time should not be 10 N times less than the frame duration, where N is the number of lines in one frame), the controller (34) switches off the column buses from the column buffer (40) and the separator (38) stops the transmission of the recording signal to the information inlet of the line buffer (39). Then, the (i+1)th line is recorded into the cells (1) of the light modulator (14) in the same succession. Information or any other signals emerging from the source of input electrical signals (18), which generates signals controlling the operation of other devices within the light modulator, are sent to the inlet of the synchroniser (35) and the 2nd inlet of the controller (34).

The electrical signals emerging from these devices, Uelect.i, as voltage pulses of identical shape and duration but of different amplitude (which correspond to the incoming information) are sent along line and column buses to the signal electrodes (3) of all cells (1) of the light modulator (14) with a deformable gel layer. Their passage generates ponderomotive forces at the interface between the deformable dielectric layers (4, 5) in each cell due to different dielectric permitivities of the said layers. These forces cause a deformation of the interface whose extent depends on the voltage applied to the signal electrodes. At least one of the two deformable layers (4 or 5) in each cell should be gel-like. If the second layer is also a gel, its dielectric permitivity should differ from that of the first layer.

The geometric relief recorded on the surface of the deformable gel layer (5) is reproduced on the surface of the output optical signals receptor (17) as a line consisting of dots.

The support voltage unit (8) and the bias voltage unit (9) fulfil the following functions. The intensity of ponderomotive forces in a given point on the free surface of the deformable gel layer (7) is roughly proportional to the square of strength of the electric field in the said point (in one of the two adjacent media). The strength of an electric field created by a certain signal electrode (3) is proportional to the voltage between this signal electrode (3) and the substrate electrode (6) within the same cell (1), i.e., the strength of an electric field formed underneath the i-th signal electrode (3) at a definite instant of time is proportional to [Uelect.i - Usupport], where Usupport is the instantaneous value of the support voltage generated by the support voltage unit (8), Uelect.i = (Usign.i + Ubias) is the voltage at the i-th signal electrode (3), Usign.i is the instantaneous value of the signal voltage at the i-th signal electrode (3) and Ubias is the instantaneous value of the bias voltage generated by the bias voltage unit (9).

For a certain relief depth, Ai, we obtain:

$$A_i = [U_{sign.i} + U_{bias} - U_{support}]^2 = U^2_{support} - 2\,U_{support}\cdot[U_{sign.i} + U_{bias}] + [U_{sign.i} + U_{bias}]^2 .$$

The first term in this expression cannot induce a relief, since the additional electric field created by the support voltage unit (8) is homogenous. If Usupport exceeds [Usign.i + Ubias] 5- to 10-fold, the third term (in contrast with the second one) can be neglected. Therefore, for the proposed device:

$$A_i \sim U_{support}\cdot[U_{sign.i} + U_{bias}]. \quad (1)$$

It follows from the above formula (1) that the support voltage, Usupport, provides the required sensitivity of the light modulator (14) owing to the formation of an additional spatially homogenous component of electric field strength at the interface between two deformable dielectric layers (4, 5). This permits the application of several times lower voltages to the signal electrodes (3) in comparison with systems which do not utilise support voltage units (8) and, within a certain range of signal voltages, ensures the linear dependence of illumination intensity in some point on the surface of the output optical signal receptor (17) (e.g., on the screen) on signal voltage, Usign.i, which considerably improves the quality of displayed half-tone images.

The application of bias voltage units (9) makes it possible to minimise the effect of the initial non-linear segment of the grey-scale characteristic curve of the light modulator (14) on the image quality. This unit shifts the reference point of signal voltages to the initial point of the linear segment of the grey-scale characteristic curve.

The support voltage, Usupport, and the bias voltage, Ubias, may be constant or alternating. In the latter case, higher quality of video images can be attained through elimination of charge inleakage in the deformable gel layer (5). Assume that the support voltage, Usupport, and the bias voltage, Ubias, are constant and that rectangular voltage pulses are sent to the signal electrodes (3). Under these conditions, the support voltage will induce the inleakage of electric charges from the depth of the deformable gel layer (5) to the interface between the deformable layers (4, 5) in all cells (1) of the light modulator (14). This phenomenon, which has been observed experimentally, may be due to the presence in the dielectric gel layer (5) of low-molecular-weight admixtures (e.g., residues of a crosslinking reagent or a catalyst), moisture, etc., thermal ionisation of macromolecules and contaminant molecules, slow relaxation, charge injection from the support electrode, etc. The total quantity of the accumulated charge is proportional to the support voltage and does not change with time. When a square voltage pulse is sent to a certain signal electrode (3), the electric charges will run off along the interface between the deformable layers to be accumulated underneath the signal electrode. According to experimental data, the time constant of this charge flow is two or three orders of magnitude higher than the time of development (and erasure) of the relief. Therefore, if single voltage pulses are applied, electric charges will remain uniform and will not influence upon the relief (and, correspondingly, upon the quality of the recorded information). However, if voltage pulses with a low (2 to 4) on-off time ratio are sent in series, the amplitude of the relief will gradually increase from pulse to pulse due to charge inleakage and the relief will not be erased completely in the time between the pulses. If this sequence of pulses represents a line or a column projected onto the plane of the output optical signal receptor (17), the first projected dots will be dim, while the last dots will be luminous, although all of them are expected to be of equal brightness.

Charge inleakage can be prevented by high-frequency filling of control pulses. Each voltage pulse, Usign.i, applied to the i-th signal electrode is filled with a bipolar voltage. (Fig. 3 provides an illustration of rectangular control pulses filled with rectangular bipolar voltages). The support voltage, Usupport, and the bias voltage, Ubias, should have the same structure as the high-frequency bipolar filling of control pulses, Usign.i. The support voltage, Usupport, should be antiphasic, while the bias voltage, Ubias, should be synphasic to Usign.i (Fig. 3). In the physical sense, the possibility of using voltages of different polarity is due to the fact that in the absence of volume charges in deformable layers and in the absence of surface charges at the interfaces between the deformable layers (4, 5), the intensity of surface and volume forces will not depend on the minus(plus) sign of the voltages at the signal (3) and support (6) electrodes of the light modulator cells (1) but, rather, on the square of their algebraic sum, i.e., [Usign.i + Ubias - Usupport]2, i.e., the amplitude of a relief will not change but the electric charges will flow in the opposite direction if the (minus)(plus) signs of all the voltages applied change to the reverse at identical absolute values. By changing rapidly the voltage polarity, one can generate electric charges that would be evenly distributed across the whole surface of the deformable gel layer (5), but the development and erasure of the relief will be insensitive of this change. It should be noted also that in actual practice the rate of charge inleakage may differ drastically for positive and negative voltages of identical absolute value. For example, if the substrate electrode - deformable gel layer junction (volt-amperic characteristics) is asymmetric, the charges will be rapidly injecting into the gel and then flow back into the substrate electrode (or out of it); therefore, a certain freedom in the selection of high-frequency bipolar filling is required. This can be achieved by varying the duration and amplitudes of positive and negative segments for all the voltages with constant periods and amplitudes. The amplitude and duration of positive (U+ and $\tau$ +) and negative (U- and $\tau$-) segments are shown in Fig. 3. With a change in these parameters, the period, T = $\tau$+ + $\tau$, and the overall amplitude, ( U+ + U- ), will remain constant. If the period, T, is far less than the mechanical time constant for the development and erasure of a relief (for the silica gel proposed, T is ~ 0.3 - 1 s), the gel will not react to the fast change in [Usign.i + Ubias - Usupport]2 but will react to its medium value, Umed. If the amplitude and duration of positive and negative segments of high-frequency bipolar filling change at constant Umed, the amplitude of the relief will not change either but charge inleakage will be eliminated.

It has to be remembered that such an equilibrium of charges in the gel may not be stable, i.e., a slight change in U+, U-, t+ or t- will initiate a new inleakage of electric charges. Therefore, high-frequency bipolar filling demands a feedback where an optical signal is received from the relief formed underneath one of the signal electrodes (3) with the aid of the output optical signal receptor (17) which provides information about charge accumulation. This information is supplied to the controller (34) of the light modulator with a deformable gel layer which adjusts the amplitudes and duration of segments of high-frequency bipolar filling in order to eliminate charge inleakage. Since in the absence of charge inleakage the relief should be minimum, the controller (34) has to maintain the signals leaving the output optical signal receptor at the minimum level (17). This feedback is distinct from the correction of grey scale or other characteristics.

It has to be noted that the rectangular shape of the high-frequency bipolar filling depicted in Fig. 3 is not unique and voltage pulses can also acquire trapezoidal, saw-tooth or any other shape.

In order to protect the surface of the signal electrode from dust and oxidation by the moisture present in the atmospheric air, the signal electrodes (3) in each cell (1) of the light modulator (14) with a deformable gel layer may be coated with a dielectric layer (33) as shown -in Fig. 13, which can protect the electrodes. Additionally or alternatively, such a dielectric layer can be formed as a dielectric mirror. This is of use in an optical system in which reading light is reflected from the dielectric layer (33) and then in the opposite direction, i.e. through the layers (4) and (5), after passage through the dielectric layers (4) and (5).

In reflection of the light from the dielectric layer (33) it is necessary to avoid additional modulation of the light beam. To ensure this, the reflecting surface of the layer (33) should be made as plane as possible and not mimic the contours of the electrodes underneath the layer. Thus, preferably the planar surface of the layer (33) should not incline by more than 0.1 $\mu$m over a 50 mm length, and the size of any local defects on the surface (protrusions, holes) should not exceed one tenth of the wavelength of the reading light.

The summation of light fluxes can be performed either with the aid reflecting mirrors (i.e., directly on the screen) or with the aid of dichroic mirrors.

In the embodiments described, there is provided a three-colour transformable optical system comprising three identical independent information display channels, each containing a light source (10), a condenser (11), the first diaphragm (12), a composite illuminant objective (13), a transparent light modulator (14) with a deformable gel layer, a composite projection objective (15) and a second diaphragm (16) (all arranged in succession along the same optical axis) as well as a system (59) of reflecting mirrors (60) placed behind the second diaphragms (16), a source of input electrical signals (18) and an output optical signal receptor (17) whose sensitivity is sufficient for monitoring changes in spatial-frequency and edge effect characteristics as well as in grey-scale, time-frequency and colorimetric characteristics of modulated light fluxes (or at least in one thereof); the reflecting mirrors (60) are arranged in such a way that the three colour fluxes that have passed through the second diaphragms (16) in each channel are summated into a full-colour image on the surface of the output optical signal receptor (17); in addition, every light modulator (14) with a deformable gel layer comprises one or several cells (1), a support voltage unit (8) and a bias voltage unit (9); each cell (1) of the said modulator (14) contains one signal (3) and one support (6) electrode as well as two deformable dielectric layers (4, 5) of different dielectric permitivities (at least one thereof (5) is gel-like) and placed at random sequence between the signal (3) and support (6) electrodes formed on the surface of the corresponding dielectric substrate (2 or 7); one outlet of the support voltage unit (8) is connected with the support electrodes (6) of all cells (1), while the other outlet is grounded; one outlet of the bias voltage unit (9) is also grounded; the voltages applied to the signal (3) and support (6) electrodes in each cell (1) of the light modulator (14) with a deformable gel layer can be constant or alternating so that at any instant of time the polarity of voltage applied to the signal electrodes (3) is opposite to the polarity of voltage applied to the support electrodes (6); the surfaces of the first (12) and second (16) diaphragms in each independent information display channel are optically conjugated; the interface between the deformable layers (4, 5) in each cell (1) of the light modulator (14) is optically conjugated with the surface of the output optical signal receptor (17), and the surface of the second diaphragm (16) represents the surface of a spatial Fourier image of the interface between the deformable layers (4, 5).

The light modulator (14) comprises additionally a controller (34), a synchroniser (35), an input electric signal converter (36), a grey-scale corrector (37), a separator (38), a line buffer (39), a column buffer (40) as well as line and column buses; all the cells (1) of the light modulator (14) have been made as a matrix; the inlet of the synchroniser (35) is connected with the source of input electrical signals (18) and the outlet is connected with the 1st inlet of the controller (34); the 2nd inlet of the said controller (34) is connected with the source of input electrical signals (18), and the outlets of the said controller (34) are connected with the control inlet of the line buffer (39) and the 1st inlet of the input electrical signal converter (36); the 2nd inlet of the said converter (36) is connected with the source of input electrical signals (18) and the outlet of the said converter (36) is connected with the information inlet of the grey-scale corrector (37); the line buses are connected with the outlets of the line buffer (39); the column buses are connected with the outlets of the column buffer (40); the informational inlet of the separator (38) is connected with the outlet of the grey-scale corrector (37); the synchronisation inlet of the separator (38) is connected with the outlet of the synchroniser (35); the outlets of the separator (38) are connected with the information inlets of the line (39) and column (40) buffers; the control inlet of the column buffer (40) is connected with the controller (34), and the 1st and 2nd control inlets of the grey-scale corrector (37) are connected with the controller (34) and the bias voltage unit (9), respectively.

The three-colour transformable optical system comprises additionally a feedback device (19) whose inlet is connected with the output optical signal receptor (17) and the outlet of the said device is connected with the 3rd inlet of the controller (34) of the light modulator (14) with a deformable gel layer. Each cell (1) of the light modulator (14) contains additionally a protective dielectric layer (33) coated onto a signal electrode (3) and a switch device (41) whose outlet is connected with the signal electrode (3); the record-erasure control inlet is connected with the line bus, and the record-erasure inlet is connected with the column bus.

In some embodiments, there is provided a three-colour transformable optical system containing three identical independent information display channels, each comprising the following components arranged in succession along the same optical axis: a light source (10), a condenser (11), the first diaphragm (12), a composite illuminant objective (13), a transparent light modulator (14) with a deformable gel layer and a composite projection objective (15) as well as a system (61) of dichroic mirrors (62) placed behind the composite projection objectives (15), a second diaphragm (16), a source of input electrical signals (18) and an output optical signal receptor (17) whose sensitivity is sufficient for monitoring changes in spatial-frequency and edge effect characteristics as well as in grey-scale, time-frequency and colorimetric characteristics of modulated light fluxes (or at least in one thereof); the dichroic mirrors (62) are arranged in such a way that the three colour light fluxes that have passed through the composite projection objectives (15) in each channel are summated into a full-colour image on the surface of the output optical signal receptor (17); besides, every light modulator (14) with a deformable gel layer comprises one or several cells (1), a support voltage unit (8) and a bias voltage unit (9); each cell (1) of the said modulator (14) contains one signal (3) and one support (6) electrode as well as two deformable dielectric layers (4, 5) of different dielectric permitivities (at least one thereof (5) is gel-like) and placed at random sequence between the signal (3) and support (6) electrodes formed on the surface of the corresponding dielectric substrate (2 or 7) one outlet of the support voltage unit (8) is connected with the support electrodes (6) of all cells (1), while the other outlet is grounded; one outlet of the bias voltage unit (9) is also grounded; the voltages applied to the signal (3) and support (6) electrodes in each cell (1) of the light modulator (14) with a deformable gel layer can be constant or alternating so that at any instant of time the polarity of voltage applied to the signal electrodes (3) is opposite to the polarity of voltage applied to the support electrodes (6); the surfaces of the first (12) and second (16) diaphragms in each independent information display channel are optically conjugated; the interface between the deformable layers (4, 5) in each cell (1) of the light modulator (14) is optically conjugated with the surface of the output optical signal receptor (17), and the surface of the second diaphragm (16) represents the surface of a spatial Fourier image of the interface between the deformable layers (4, 5).

The second diaphragm (16) has been made as a system of three-colour light filters that stop zero orders of diffraction of all the three basic colours but are transparent to higher orders of diffraction of the same colours.

In some embodiments, there is provided a three-colour transformable optical system in which the output optical signal receptor (17) has been made as a screen (17) which is optically conjugated with the human eye; the matrix of cells (1) of every light modulator (14) with a deformable gel layer has been specially designed for line-by-line input of information so that the signal electrodes (3) of all cells (1) of the said modulator (14) are linear and parallel to one another; the composite illuminant objectives (13) and the composite projection objectives (15) of all the three independent information display channels contain at least one cylindrical lens ((66) and (67), respectively); the generatrices of the cylindrical lenses (67) of the composite projection objectives (15) and the linear signal electrodes (3) of the light modulators (14) with a deformable gel layer are parallel to one another and to the bars of the first (12) and second (16) diaphragms and perpendicular to the generatrices of the cylindrical lenses (66) of the composite illuminant objectives (13); besides, the three-colour transformable optical system has been provided with a scanning mirror device (27) placed before the screen (17), a radiating element (28) and a photosensor (29) adjacent to the scanning mirror device (27) so that the incident light from the radiating element (28) is reflected from the scanning mirror device (27) and sent to the photosensor (29) once in every scanning cycle; the light source (10) in each independent information display channel is of pulse type, is triggered externally and is connected with the controller (34) of the light modulator (14) localised in the corresponding channel; the photosensor (29) is connected with the synchronisers (35) of all light modulators (14) with a deformable gel layer; the electric motor (30) of the scanning mirror device (27) is connected with the controllers (34) of all light modulators (14); the rotation axis (31) of the scanning mirror device (27) is perpendicular to the generatrices of the cylindrical lenses (67) of the composite projection objectives (15) and to the linear signal electrodes of the light modulators.

In some embodiments, there is provided a three-colour transformable optical system which utilises a common thermal light source (10) for all the three information display channels and a common condenser (11) placed on the same optical axis behind the thermal light source (10); the second diaphragm (16) in each information display channel features such a construction that permits one to single out the spectral ranges of red, green or blue colours within each diffraction order and the condenser (11), which is also common for all the three channels, collects the light flux emerging from the light source (10), splits it into three independent fluxes and sends them to the first diaphragms (12) and composite illuminant objectives (13) of each independent information display channel.

One three-colour transformable optical system contains additionally a three-section light filter (70) placed before the first diaphragms (12) of all the three independent information display channels and before or after the condenser.

Three-colour transformable optical systems based on light modulators with deformable gel layers according to the invention can be used for e.g.:

    information recording on photosensitive carriers (e.g. photofinish devices) with parallel recording with a laser or a thermal light beam (up to 10,000 dots per line);
    information display (e.g., as TV projectors) for individual and public demonstrations with the use of light fluxes (up to 20 kilolumen and more) emitted by thermal or laser sources;
    image recognition at image changeover rates above 50 kHz;

coding and decoding in security systems;

long-distance transferring of information (including telephone, TV and other types of electronic communication);

light commutation utilising light-fibre optics.

**Claims**

1. A colour optical system comprising means for producing light fluxes of three different colours and further comprising three colour channels adapted to handle said fluxes of three different colours respectively, output from the three channels being combined to create a colour image, wherein each channel includes an optical element (14) having at least one cell comprising two deformable dielectric layers (4, 5) which meet at an interface, at least one of which (5) is a relief forming gel, a first electrode (6) on one side of the layers and signal electrode (3) on the other side of the layers, means (18) for supplying a signal to the signal electrode and means (8) for supplying a support voltage to the first electrode, **characterised in that** the support voltage for each channel differs from the support voltage of the other channels and is proportional to the wavelength of light being handled by the channel.

2. A colour optical system as claimed in claim 1, **characterised in that** each channel includes a light source (10), first diaphragm means (12), a said optical element (14), and a second diaphragm means (16).

3. A colour optical system as claimed in claim 2, **characterised in that** a system (59) of reflecting mirrors (60) summates the output of the three channels into a full colour image.

4. A colour optical system as claimed in claim 2, **characterised in that** a system (61) of dichroic mirrors (62) is such that the output from the last of the dichroic mirrors is a single flux.

5. A colour optical system as claimed in claim 1, **characterised in that** each channel includes a light source, first diaphragm means, and a said optical element, wherein there is a common second diaphragm means (16) to receive combined output from the three channels, the second diaphragm means being in the form of a system of light filters (63, 64, 65) capable of stopping light fluxes of zero orders of diffraction but passing light fluxes of higher orders of diffraction for all three colours.

6. A colour optical system as claimed in claim 1, **characterised in that** there is a common light source (10) and each channel includes first diaphragm means (12), and second diaphragm means (16) independent of the second diaphragm means for the other channels, the second diaphragm means for each channel permitting the passage only of light of the colour associated with that channel.

7. A colour optical system as claimed in any preceding claim, **characterised in that** said optical element (14) meets the following criteria:

$$0.01d1 < d2 < d1$$
$$d2 > \lambda//(20|\eta1-\eta2|)$$
$$|\eta1-\eta2| > 0.1$$
$$tp > 0.01\ \tau m$$
$$0.1d1 < L < 10d1$$

in which d2 is the distance between the signal electrode (3) and the interface between the deformable layers (4, 5) ; d1 is the distance between the first electrode (6) and the interface between the deformable layers; $\lambda$ is the wavelength of light with which the optical element is used; $\eta1$ is the refractive coefficient of one of the deformable layers; $\eta2$ is the refractive coefficient of the other of the deformable layers; tp is the duration of voltage pulses applied to the signal electrodes; $\tau m$ is the time constant of mechanical relaxation of the relief formed at the interface between the layers; and L is the minimum spatial period between electrodes in adjacent cells.

8. A colour optical system as claimed in any preceding claim, **characterised in that** the relief forming gel of said optical element is a polyorganosiloxane gel.

**Patentansprüche**

1. Optisches Farbsystem, das Mittel enthält, um Lichtströme mit drei verschiedenen Farben zu erzeugen, und ferner drei Farbkanäle enthält, die dafür ausgelegt sind, die Ströme mit drei jeweils verschiedenen Farben zu verwenden, die von den drei Kanälen ausgegeben werden und kombiniert werden, um ein Farbbild zu erzeugen, wobei jeder Kanal ein optisches Element (14) enthält, das wenigstens eine Zelle besitzt, die zwei verformbare dielektrische Schichten (4, 5), die an einer Grenzfläche zusammentreffen, wovon wenigstens eine (5) ein ein Relief bildendes Gel ist, eine erste Elektrode (6) auf einer Seite der Schichten und eine Signalelektrode (3) auf der anderen Seite der Schichten, Mittel (18) zum Liefern eines Signals an die Signalelektrode und Mittel (8) zum Liefern einer Unterstützungsspannung an die erste Elektrode aufweist, **dadurch gekennzeichnet, dass** die Unterstützungsspannung für jeden Kanal von der Unterstützungsspannung der jeweils anderen Kanäle verschieden ist und zu der Lichtwellenlänge, die von dem Kanal verwendet wird, proportional ist.

2. Optisches Farbsystem nach Anspruch 1, **dadurch gekennzeichnet, dass** jeder Kanal eine Lichtquelle (10), ein erstes Membranmittel (12), ein optisches Element (14) und ein zweites Membranmittel (16) enthält.

3. Optisches Farbsystem nach Anspruch 2, **dadurch gekennzeichnet, dass** ein System (59) aus reflektierenden Spiegeln (60) die Ausgänge der drei Kanäle zu einem Vollfarbenbild summiert.

4. Optisches Farbsystem nach Anspruch 2, **dadurch gekennzeichnet, dass** ein System (61) aus dichroitischen Spiegeln (62) derart beschaffen ist, dass der Ausgang des letzten der dichroitischen Spiegel ein Einzelstrom ist.

5. Optisches Farbsystem nach Anspruch 1, **dadurch gekennzeichnet, dass** jeder Kanal eine Lichtquelle, ein erstes Membranmittel und ein optisches Element enthält, wobei ein gemeinsames zweites Membranmittel (16) vorhanden ist, um einen kombinierten Ausgang von den drei Kanälen zu empfangen, wobei das zweite Membranmittel die Form eines Systems von Lichtfiltern (63, 64, 65) hat, die Lichtströme nullter Beugungsordnung blockieren, jedoch Lichtströme höherer Beugungsordnungen für alle drei Farben durchlassen.

6. Optisches Farbsystem nach Anspruch 1, **dadurch gekennzeichnet, dass** eine gemeinsame Lichtquelle (10) vorhanden ist und jeder Kanal ein erstes Membranmittel (12) und ein zweites Membranmittel (16), das von den zweiten Membranmitteln der anderen Kanäle unabhängig ist, enthält, wobei das zweite Membranmittel für jeden Kanal den Durchgang nur des Lichts mit der Farbe, die diesem Kanal zugeordnet ist, erlaubt.

7. Optisches Farbsystem nach einem vorhergehenden Anspruch, **dadurch gekennzeichnet, dass** das optische Element (14) die folgenden Kriterien erfüllt:

   $$0{,}01d1 < d2 < d1$$
   $$d2 < \lambda/(20\ \eta 1 - \eta 2)$$
   $$\eta 1 - \eta 2 > 0{,}1$$
   $$tp > 0{,}01\ \tau m$$
   $$0{,}1dl < l < 10dl$$

   wobei d2 der Abstand zwischen der Signalelektrode (3) und der Grenzfläche zwischen den verformbaren Schichten (4, 5) ist; d1 der Abstand zwischen der ersten Elektrode (6) und der Grenzfläche zwischen den verformbaren Schichten ist; $\lambda$ die Lichtwellenlänge ist, bei der das optische Element verwendet wird; $\eta 1$ der Brechungsindex einer der verformbaren Schichten ist; $\eta 2$ der Brechungsindex der anderen der verformbaren Schichten ist; tp die Dauer der Spannungsimpulse, die an die Signalelektroden angelegt werden, ist; $\tau m$ die Zeitkonstante der mechanischen Relaxation des an der Grenzfläche zwischen den Schichten gebildeten Reliefs ist; und L die minimale räumliche Periode zwischen Elektroden im benachbarten Zellen ist.

8. Optisches Farbsystem nach einem vorhergehenden Anspruch, **dadurch gekennzeichnet, dass** das ein Relief bildende Gel des optischen Elements ein Polyorganosiloxan-Gel ist.

**Revendications**

1. Système optique de couleur comprenant des moyens pour produire des flux de lumière de trois couleurs différentes et comprenant en outre trois canaux de couleur adaptés pour traiter lesdits flux de trois couleurs différentes respectivement, délivrés en sortie par les trois canaux étant combinés pour créer une image de couleur, dans lequel chaque canal comprend un élément optique (14) ayant au moins une cellule comprenant deux couches diélectriques déformables (4, 5) qui se rencontrent au niveau d'une interface, au moins l'une d'entre elles (5) est un gel de formation de relief, une première électrode (6) sur un côté des couches et une électrode de signal (3) sur l'autre côté des couches, des moyens (18) pour fournir un signal à l'électrode de signal des moyens (18) pour fournir un signal à l'électrode de signal et des moyens (8) pour fournir une tension de soutien à la première électrode, **caractérisé en ce que** la tension de soutien de chaque canal est différente de la tension de soutien des autres canaux et est proportionnelle à la longueur d'onde de lumière étant traitée par le canal.

2. Système optique de couleur selon la revendication 1, **caractérisé en ce que** chaque canal comprend une source de lumière (10), des premiers moyens de diaphragme (12), ledit un élément optique (14), et des seconds moyens de diaphragme (16).

3. Système optique de couleur selon la revendication 2, **caractérisé en ce que** un système (59) de miroirs réfléchissants (60) additionne la sortie des trois canaux dans une image de couleur complète.

4. Système optique de couleur selon la revendication 2, **caractérisé en ce que** un système (61) de miroirs dichroïques (62) est tel que la sortie du dernier des miroirs dichroïques est un flux unique.

5. Système optique de couleur selon la revendication 1, **caractérisé en ce que** chaque canal comprend une source de lumière, des premiers moyens de diaphragme, et ledit un élément optique, dans lequel il existe des seconds moyens de diaphragme communs (16) pour recevoir la sortie combinée des trois canaux, les seconds moyens de diaphragme étant sous la forme d'un système de filtres de lumière (63, 64, 65) capable d'arrêter des flux de lumière d'ordres nuls de diffraction, mais laissant passer des flux de lumière d'ordres supérieurs ordres supérieurs de diffraction pour chacune des trois couleurs.

6. Système optique de couleur selon la revendication 1, **caractérisé en ce que** il existe une source de lumière commune (10) et chaque canal inclut des premiers moyens de diaphragme (12), et des seconds moyens de diaphragme (16) indépendants des seconds moyens de diaphragme pour les autres canaux, les seconds moyens de diaphragme pour chaque canal permettant le passage uniquement d'une lumière de la couleur associée à ce canal.

7. Système optique de couleur selon l'une quelconque des revendications précédentes, **caractérisé en ce que** ledit élément optique (14) satisfait aux critères suivants :

$$0,01d1 < d2 < d1$$
$$d2 > \lambda / (20 \square \square 1 - \square 2 \square)$$
$$\square \square 1 \square 2 \square > 0,1$$
$$tp > 0,01 \ \tau m$$
$$0,1d1 < L < 10d1$$

où d2 est la distance entre l'électrode de signal (3) et l'interface entre les couches déformables (4, 5); d1 est la distance entre la première électrode (6) et l'interface entre les couches déformables; $\lambda$ est la longueur d'onde de lumière avec laquelle l'élément optique est utilisé; $\square 1$ est le coefficient de réfraction de l'une des couches déformables; $\square 2$ est le coefficient de réfraction de l'autre des couches déformables; tp est la durée des impulsions de tension appliquées aux électrodes de signal; $\tau m$ est la constante de temps de relaxation mécanique du relief formé au niveau de l'interface entre les couches, et L est la période spatiale minimale entre des électrodes dans des cellules adjacentes.

8. Système optique de couleur selon l'une quelconque des revendications précédentes, **caractérisé en ce que** le gel de formation de relief dudit élément optique est un gel de polyorganosiloxane.

Signals emerging from the line buffer

FIG. 1

FIG. 2

FIG. 3

FIG. 4

FIG. 5

FIG. 6

FIG. 7

FIG. 8

FIG. 10

FIG. 9

FIG. 11

Signals emerging from the source of input signals (18)

2nd inlet

2nd inlet

3rd inlet

1st inlet

| 36 |

| 34 |

1st inlet

| 35 |

Information inlet

1-st control inlet

Synchronization inlet

| 37 |

| 38 |

2-nd control inlet

Information inlet

9

8

FIG. 12

Signals emerging
from the feedback device (19)

Control inlet

Line buses

39

Information inlet

1

1

Control inlet

Column buses

40

Information inlet

FIG. 12 CONTINUED

FIG. 13

EP 2 293 134 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 4626920 A
- US 4857978 A
- US 4900136 A
- RU 2031624
- RU 2078478
- RU 2080641
- RU 9710888604
- RU 2080624 C1

**Non-patent literature cited in the description**

- **F. FISCHER.** *electro-optical transformer,* 1939
- **PROFESSOR YURI GUSCHO.** *Physics of Reliefography,* 1999, ISBN 5-8213-0039-8